# EUROPEAN PATENT APPLICATION

(11) **EP 4 796 510 A1**
(43) Date of publication of application: **26.08.2026**
(21) Application number: 26157352.1
(22) Date of filing: 09.02.2026
(51) Int. Cl.: C04B 18/20, C04B 28/14, C04B 28/02

(54) **SYSTEM FOR RECYCLING POLYISO INSULATION USING GYPSUM OR CEMENT**

(30) Priority: 10.02.2025 US 202563756526 P; 30.12.2025 US 202519437012
(71) Applicant: Carlisle Construction Materials, LLC, Carlisle, PA 17013 (US)
(72) Inventor: ZHANG, Xuan, Carlisle 17013 (US); ROSMUS, Travis, Carlisle 17013 (US); JOHNSON, Rachel, Carlisle 17013 (US)
(74) Representative: Mewburn Ellis LLP

(57) **Abstract**

A method of making a building cover board or wall sheathing, by: (a) mixing polyiso waste particles with gypsum powder or cement; (b) adding water to the mixture; (c) placing the mixture into a mold; and then (d) allowing the mixture to dry, wherein the ratio by weight of polyiso waste to gypsum powder or cement is between 1:30 to 1:4, and wherein the gypsum or cement accounts for 80% to 97% by weight of total formulation excluding water.

## Description

### Related Application:

The present application claims priority to U.S Provisional Patent Application Serial No. 63/756,526, of same title, filed February 10, 2025, the entire disclosure of which is incorporated herein by reference in its entirety for all purposes.

### Technical Field:

The present system relates to recycling polyiso insulation scrap materials for use in building cover boards.

### Background of the Invention:

The process of making polyiso insulation often results in a significant amount of polyiso waste. The source of this waste can come from multiple factors. First, polyiso boards are usually made on a continuous production line. These boards are trimmed on the edges and cut down to regular sizes of 4'x8' or 4'x4' by sawing. This saw trimming and cutting creates significant amounts of fine polyiso dust waste. Second, the starting and stopping of the polyiso production line creates a significant amount of "out of quality" polyiso board which is typically just sent to a landfill. Third, "out of quality" polyiso waste is also generated during grade changeovers on the production line. Unfortunately, all of this polyiso waste is typically just sent to a landfill. It would instead be desirable to recycle and somehow re-use this polyiso waste material.

Unfortunately, a big recycling challenge is that the components of this polyiso waste are typically both a mixture of facer materials, wood, and polyiso foam of various densities (both of which occur in a variety of different particle sizes). There are many existing systems for recycling polyisocyanurate chemically to decompose the material into polyol. For example, U.S. Patent 4,110,266 describes a process of decomposing polyurethane and polyisocyanurate via reaction with ammonia, or with an amine or a polyol. This allows for reuse of waste foam to make new foam materials. However, this depolymerization process does not work in the presence of significant amounts of facer material. Unfortunately, the separation of facer and polyisocyanurate materials present significant challenges. When facer materials are present, they can include paper, coated glass, foil, plastic, wood and other materials. These materials can be are very light and can be a mixture of different particle sizes. Sometimes, these waste materials are in board form and have different sizes and shapes. All of this makes the recycling of polyiso waste difficult.

It would instead be desirable to recycle all of this material, as this would cut down on landfill waste. In addition, it would be desirable to use/recycle these materials into other useful building materials. This would have the advantage of keeping the recycled material within the same building construction industry. Ideally, the building materials company that initially generated the polyiso waste would be same company that could actually use this waste to produce new building materials from this recycled waste.

### Summary of the Invention:

The present invention provides a system for recycling polyiso waste to create new building materials. Most preferably, these new building materials are roofing cover boards and wall sheathing.

In one preferred aspect, the present system provides a method of making a building product, comprising:
(1) Mixing polyiso waste with gypsum powder or cement. In various preferred aspects, this mixing can be done in a tumble mixer, a paddle mixer, or other suitable equipment. Optionally, additional binders can be used. This binder can include a cementitious binder, a non-cementitious binder, or a combination thereof. Examples of a suitable cementitious binder include Portland cement, blended Portland cements, calcium cements, lime, clay, fly ash, pozzolans, silica fume, blast furnace slag, rice husk ash or any combination thereof. In other preferred aspects, fibrous materials can be added. Fibrous materials can include synthetic fiber such as polypropylene and natural fibers from recycled papers. Furthermore, solid additives, such as free flow agents, lubricants, flame retardants, waterproofing additives and other functional ingredients, can be added.
(2) Adding water to the mixture of polyiso waste and gypsum powder or cement. In preferred aspects, this mixture can be further mixed or tumbled to achieve a homogeneous mixture. Furthermore, liquid additives, such as plasticizers, disperse agents, free flow agents, lubricants, flame retardants, waterproofing additives and other functional ingredients, can be added. Optionally, air entrainment agents can be added. Examples of air entrainment agents are surfactants of various hydrophobicity.
(3) Placing the resulting mixture into a mold or onto a belt press; and then
(4) Allowing the resulting mixture to cure (preferably in an oven).

In preferred aspects, the ratio by weight of polyiso waste to gypsum powder or cement is between 1:30 to 1:4; and the ratio of water to gypsum powder or cement by weight is from 0.4:1 to 2.5:1. This corresponds to the gypsum or cement accounting for 80% to 97% by weight of the total formulation excluding water. The more preferred ranges for the gypsum accounting for 83% to 94 % by weight of the total formulation.

An advantage of using a small amount of polyiso waste in the mixture is that the properties of the cover board more closely resemble the properties of normal gypsum board, i.e. the board will have strong compressive strength and high density. Conversely, when a larger amount of polyiso waste is incorporated into the mixture, the resulting building material (cover board) will be light weight and have a lower compressive strength. Specifically, when a larger amount of polyiso waste is used, the present inventors have determined that a significant amount of air bubbles will be entrapped in the final board further contributing to the lower density of the board. The present inventors have experimentally determined that the preferred above range of gypsum of 80% to 97% (or more preferably 83% to 94%) of the weight of the total formulation offers the combined benefit of maximizing the amount of the polyiso waste that can be successfully recycled, without significantly affecting the compressive strength and high density of the final cover board.

The present inventors have also determined a preferred range of sizes for the recycled polyiso waste that is used in the formulation of the present cover board. Specifically, in preferred embodiments, the polyiso waste particles can be of 0.01-10 mm in diameter. In more preferred embodiments, the polyiso waste particles can be of 0.1-8 mm in diameter. In most preferred embodiments, the polyiso waste particles can be of 0.2-5 mm in diameter. Due to the edge trimming by saw, facer waste from the polyiso production process often present as a long strips. Such strips can optionally be 0.1-10 mm in length. Larger polyiso waste particles are unsuitable for use in the present building material as they will not bind properly with the gypsum.

Preferably, the gypsum particle size is between 0.01 to 0.7 mm in diameter.

In further preferred aspects, scrap facer material is directly added into the polyiso waste. This is very advantageous in that typical polyiso insulation board waste often includes both scrap polyiso material and scrap facer material. In accordance with the present system, therefore, it is not necessary to separate the facer material from the polyiso waste material.

In preferred embodiments, top and bottom facers can be added to the mixture. These top and bottom facers may be made of common suitable facer materials.

In preferred embodiments, glass or plastic fibers may be added to the mixture of polyiso waste and gypsum powder. Such fibers advantageously increase the strength of the final building product.

Although the preferred application for the present building construction material is as a roofing cover board, it is to be understood that it can also be used to as a wall sheathing.

### Brief Description of the Drawings:

Fig. 1 is an example of small particles of polyiso dust from saw dust.
Fig. 2 is an example of larger particles obtained from comminuting waste polyiso board.
Fig. 3 is an illustration of a sample of the present building construction material after it has been removed from a mold, as produced by the present inventors.
Fig. 4 is a second illustration of a sample of the present building construction material after it has been removed from a mold, as produced by the present inventors.
Figure 5 is cross section of Sample 1 from Table 1 under the microscope.
Figure 6 is cross section of Sample 3 from Table 1 under the microscope.
Figure 7 is cross section of Sample 5 from Table 2 under the microscope.
Fig. 8 is a sectional illustration of the present building material showing both polyiso foam waste and facer waste in a gypsum matrix.
Fig. 9 is similar to Fig. 8 but adds top and bottom facers.

### Detailed Description of the Drawings:

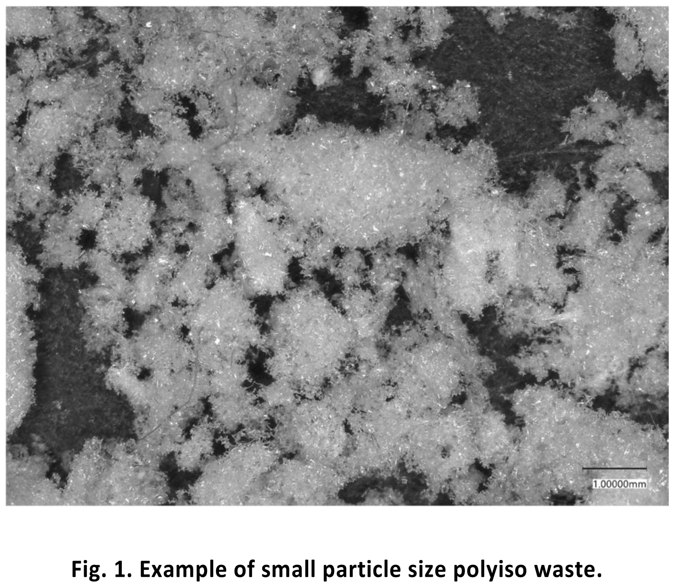

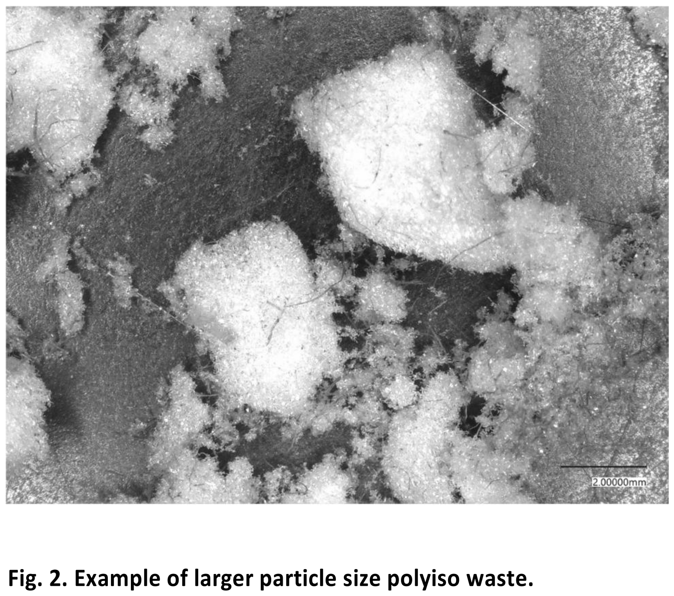

Fig. 1 is an example of small particles of polyiso dust from saw dust; and Fig. 2 is an example of larger particles are often obtained from comminuting waste polyiso board.

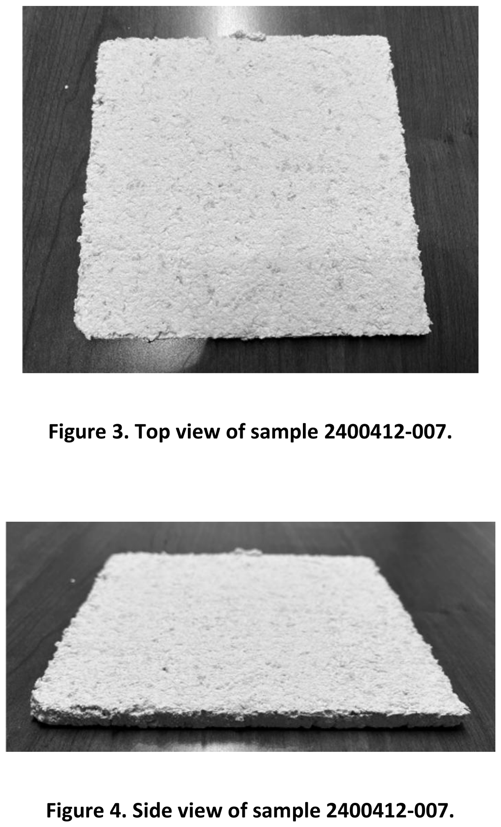

Figs. 3 and 4 illustrate a successful test sample produced by the present inventors using the present method.

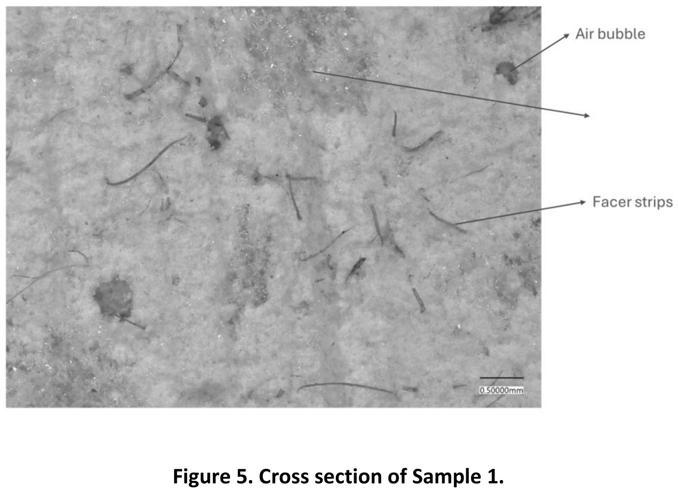

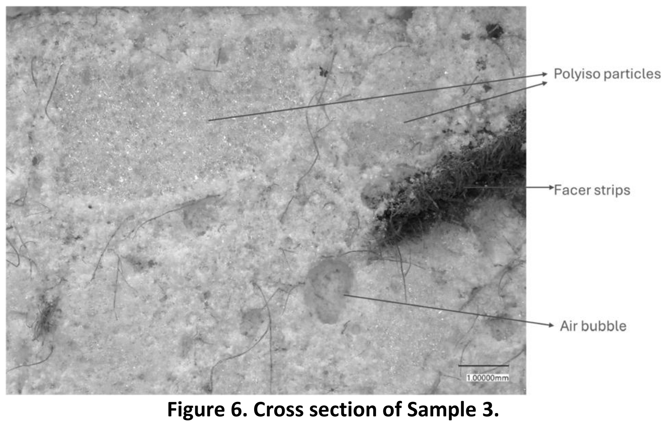

Figs. 5, 6 and 7 illustrate the final product mixture in which both polyiso foam waste and facer waste are distributed in a gypsum matrix.

The present building composite can be used to make a roofing cover board or a wall sheathing. In preferred aspects, this material is produced according to the following steps:
First, polyiso waste is mixed with gypsum powder or cement;
Second, water is added to the mixture of polyiso waste and gypsum powder or cement;
Third, this resulting mixture is placed into a mold; and then
Fourth, the resulting mixture is allowed to dry. In alternate aspects, such drying can be done in the mold or be removed from the mold and then dried.

An advantage of the present method is that it can accommodate a range of mixing ratios. For example, the ratio by weight of polyiso waste to gypsum powder or cement is between 1:30 to 1:4; and the ratio of water to gypsum powder by weight is from 0.4:1 to 2.5:1. This corresponds to the gypsum accounting for 80% to 97% by weight of the total formulation excluding water. The more preferred ranges for the gypsum accounting for 83% to 95% by weight of the total formulation.

Optionally, binders such as cement or fly ash can be added to the mixture of polyiso waste and gypsum powder or cement. Optionally as well, glass or plastic fibers can be added to the mixture of polyiso waste and gypsum powder.

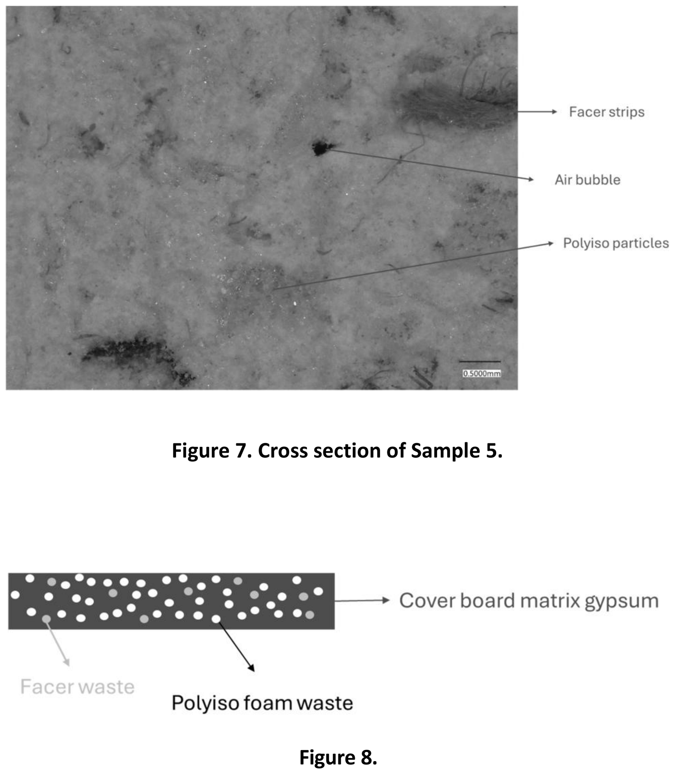

Fig. 8 is a sectional illustration of the present building material showing both polyiso foam waste and facer waste in a gypsum matrix.

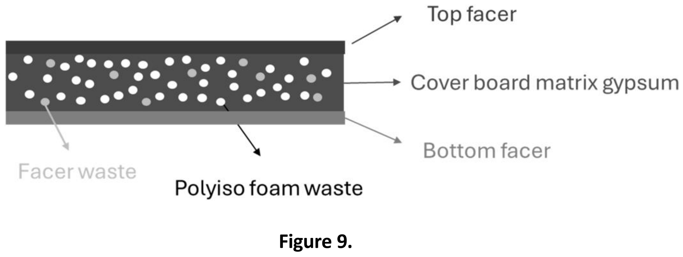

Finally, as seen in Fig. 9, top and bottom facers may be added to the mixture after the mixture has been removed from the mold. For cover boards with facers, the top and bottom facer can be made of the same material or different materials. When paper is used as the facer, the paper can be Kraft paper, glass fiber reinforced paper, metalized paper or Cardstock. Alternatively, nonwoven, glass matt, coated glass fiber facer, foil, plastic film or composite facers can be used instead. These materials form good bonds with the polymer matrix and form composite with the matrix. The top and bottom facers can be made of different materials. For example, a coated glass facer can be used as the top facer while paper facer can be used as the bottom facer.

### Experimental Results:

Tables 1-3 below show properties of the samples made by the above-described method. Table 1 and 2 show samples made using high water to gypsum ratio while Table 3 shows samples made using lower water to gypsum ratio. In all three tables below, when polyiso waste to gypsum ratio by weight is increased, the board density decreases. When the same polyiso waste to gypsum ratio by weight is used, the lower water to gypsum ratio sample (Sample 9) has significantly higher board density than the higher water to gypsum ratio samples (Sample 1 and 4). Not to be bound by the theory, this board density difference is likely due to the difference in the amount of trapped air in the matrix.

**Table 1. Examples of formulations with polyiso waste particle size range is 0.1-5 mm.**

| **Sample Name** | **Sample 1** | **Sample 2** | **Sample 3** |
|---|---|---|---|
| Water (g) | 123.0 | 141.0 | 147.8 |
| Joint Compound (g) | 85.6 | 83.8 | 82.0 |
| Polyiso Dust (g) | 7.0 | 8.9 | 11.5 |
| Iso to gypsum ratio (w/w) | 1:12.2 | 1:9.4 | 1:7.1 |
| Water to gypsum ratio (w/w) | 1:1.4 | 1:1.7 | 1:1.8 |
| Board dry weight (g) | 86.6 | 89.0 | 83.8 |
| Measured thickness (in) | 0.36 | 0.42 | 0.42 |
| Board density (lb/ft3) | 25.5 | 22.4 | 21.1 |

**Table 2. Examples of formulations with polyiso waste particle size range is 0.2-3 mm.**

| **Sample Name** | **Sample 4** | **Sample 5** | **Sample 6** |
|---|---|---|---|
| Water (g) | 120.0 | 130.0 | 140.0 |
| Joint Compound (g) | 85.6 | 79.6 | 73.8 |
| Polyiso Dust (g) | 7.0 | 8.5 | 10.4 |
| Iso to gypsum ratio (w/w) | 1:12.2 | 1:9.4 | 1:7.1 |
| Water to gypsum ratio (w/w) | 1:1.4 | 1:1.6 | 1:1.9 |
| Board dry weight (g) | 89.0 | 82.8 | 76.9 |
| Measured thickness (in) | 0.33 | 0.32 | 0.35 |
| Board density (lb/ft3) | 28.5 | 27.4 | 23.2 |

**Table 3. Examples of formulations with polyiso waste using lower water to gypsum ratio.**

| **Sample Name** | **Sample 7** | **Sample 8** | **Sample 9** |
|---|---|---|---|
| Water (g) | 134.4 | 104.0 | 88.8 |
| Joint Compound (g) | 186.9 | 144.5 | 123.4 |
| Polyiso Dust (g) | 9.8 | 10.0 | 10.1 |
| Iso to gypsum ratio (w/w) | 1:19 | 1:14.4 | 1:12.2 |
| Water to gypsum ratio (w/w) | 1:0.7 | 1:0.7 | 1:0.7 |
| Board dry weight (g) | 206.4 | 163.5 | 141.2 |
| Measured thickness (in) | 0.44 | 0.46 | 0.40 |
| Board density (lb/ft3) | 49.6 | 37.6 | 37.3 |

The following numbered paragraphs set out broad combinations of the inventive concepts herein disclosed:
1. A method of making a building cover board or wall sheathing, comprising:
   mixing polyiso waste particles with gypsum powder or cement;
   adding water to the mixture of polyiso waste and gypsum powder or cement;
   placing the resulting mixture into a mold; and then
   allowing the resulting mixture to dry,

   wherein the ratio by weight of polyiso waste to gypsum powder or cement is between 1:30 to 1:4, and
   wherein the gypsum or cement accounts for 80% to 97% by weight of total formulation excluding water.
2. The method of paragraph 1, wherein the ratio by weight of polyiso waste to gypsum or cement is between 1:17 to 1:5.
3. The method of paragraph 1, wherein the gypsum accounts for 83% to 94% by weight of total formulation excluding water.
4. The method of paragraph 1, wherein the ratio of water to gypsum powder or cement by weight is from 0.4:1 to 2.5:1.
5. The method of paragraph 1, wherein the polyiso waste includes both scrap polyiso material and scrap facer material.
6. The method of paragraph 1, wherein the gypsum particle size is between 0.01 to 0.7 mm in diameter.
7. The method of paragraph 1, wherein the polyiso waste particles are 0.01-10 mm in diameter.
8. The method of paragraph 1, wherein the polyiso waste particles are 0.1-8 mm in diameter.
9. The method of paragraph 1, wherein the polyiso waste particles are 0.2-5 mm in diameter.
10. The method of paragraph 1, further comprising:
   adding a cementitious binder to the mixture of polyiso waste and gypsum powder or cement.
11. The method of paragraph 1, further comprising:
   adding top and bottom facers to the mixture either before or after the drying.
12. The method of paragraph 1, further comprising:
   adding glass or plastic fibers to the mixture of polyiso waste and gypsum powder.
13. A building cover board or wall sheathing, comprising:
   gypsum powder wherein the gypsum particle size is between 0.01 to 0.7 mm in diameter or cement;
   polyiso waste particles being 0.01-10 mm in diameter distributed in the gypsum powder or cement;

   wherein the ratio by weight of polyiso waste to gypsum powder or cement is between 1:30 to 1:4, and
   wherein the gypsum or cement accounts for 80% to 97% by weight of total formulation excluding water.
14. The building cover board or wall sheathing of paragraph 13, wherein the ratio by weight of polyiso waste to gypsum or cement is between 1:17 to 1:5.
15. The building cover board or wall sheathing of paragraph 13, wherein the polyiso waste includes both scrap polyiso material and scrap facer material.
16. The building cover board or wall sheathing of paragraph 13, wherein the polyiso waste particles are 0.1-8 mm in diameter.
17. The building cover board or wall sheathing of paragraph 13, further comprising:
   a cementitious binder added to the mixture of polyiso waste and gypsum powder or cement.
18. The building cover board or wall sheathing of paragraph 13, further comprising:
   top and bottom facers.
19. The building cover board or wall sheathing of paragraph 13, further comprising:
   glass or plastic fibers added to the mixture of polyiso waste and gypsum powder.
20. The building cover board or wall sheathing of paragraph 13, further comprising:
   a plasticizer, a disperse agent, a waterproofing additive, an air entrapment agent, a free flow agent, a lubricant, or a flame retardant, or combinations thereof.

## Claims

1. A method of making a building cover board or wall sheathing, comprising:
mixing polyiso waste particles with gypsum powder or cement;
adding water to the mixture of polyiso waste and gypsum powder or cement;
placing the resulting mixture into a mold; and then
allowing the resulting mixture to dry,
wherein the ratio by weight of polyiso waste to gypsum powder or cement is between 1:30 to 1:4, and
wherein the gypsum or cement accounts for 80% to 97% by weight of total formulation excluding water.

2. The method of claim 1, wherein the ratio by weight of polyiso waste to gypsum or cement is between 1:17 to 1:5, and/or wherein the gypsum accounts for 83% to 94% by weight of total formulation excluding water.

3. The method of claim 1 or claim 2, wherein the ratio of water to gypsum powder or cement by weight is from 0.4:1 to 2.5:1.

4. The method of any one of claims 1 to 3, wherein the polyiso waste includes both scrap polyiso material and scrap facer material.

5. The method of any one of claims 1 to 4, wherein the gypsum particle size is between 0.01 to 0.7 mm in diameter, or wherein the polyiso waste particles are 0.01-10 mm in diameter, or wherein the polyiso waste particles are 0.1-8 mm in diameter, or wherein the polyiso waste particles are 0.2-5 mm in diameter.

6. The method of any one of claims 1 to 5, further comprising:
adding a cementitious binder to the mixture of polyiso waste and gypsum powder or cement.

7. The method of any one of claims 1 to 6, further comprising:
adding top and bottom facers to the mixture either before or after the drying.

8. The method of any one of claims 1 to 7, further comprising:
adding glass or plastic fibers to the mixture of polyiso waste and gypsum powder.

9. A building cover board or wall sheathing, comprising:
gypsum powder wherein the gypsum particle size is between 0.01 to 0.7 mm in diameter or cement;
polyiso waste particles being 0.01-10 mm in diameter distributed in the gypsum powder or cement;
wherein the ratio by weight of polyiso waste to gypsum powder or cement is between 1:30 to 1:4, and
wherein the gypsum or cement accounts for 80% to 97% by weight of total formulation excluding water.

10. The building cover board or wall sheathing of claim 9, wherein the ratio by weight of polyiso waste to gypsum or cement is between 1:17 to 1:5.

11. The building cover board or wall sheathing of claim 9 or claim 10, wherein the polyiso waste particles are 0.1-8 mm in diameter.

12. The building cover board or wall sheathing of any one of claims 9 to 11, further comprising:
a cementitious binder added to the mixture of polyiso waste and gypsum powder or cement.

13. The building cover board or wall sheathing of any one of claims 9 to 12, further comprising:
top and bottom facers.

14. The building cover board or wall sheathing of any one of claims 9 to 13, further comprising:
glass or plastic fibers added to the mixture of polyiso waste and gypsum powder.

15. The building cover board or wall sheathing of any one of claims 9 to 14, further comprising:
a plasticizer, a disperse agent, a waterproofing additive, an air entrapment agent, a free flow agent, a lubricant, or a flame retardant, or combinations thereof.
